# EUROPEAN PATENT APPLICATION

(11) **EP 4 147 972 A1**
(43) Date of publication of application: **15.03.2023**
(21) Application number: 22190576.3
(22) Date of filing: 16.08.2022
(51) Int. Cl.: B64D 13/06, B64D 37/30, B64D 37/34, B64D 41/00

(54) **CRYOGENIC FLUID HEAT EXCHANGER SYSTEM FOR AN AIRCRAFT ENVIRONMENTAL CONTROL SYSTEM (ECS)**

(30) Priority: 10.09.2021 US 202117471534
(71) Applicant: Hamilton Sundstrand Corporation, Charlotte, NC 28217-4578 (US)
(72) Inventor: QUARTARONE, Giusi, Cork (IE); ZAVAGLIO, Erica, Cork (IE); BENZI, Mattia, Cork (IE); EMERSON, Sean C., Broad Brook, CT (US); TURNEY, Joseph, Amston, CT (US); RANJAN, Ram, West Hartford, CT (US); LENTS, Charles E., Amston, CT (US)
(74) Representative: Dehns

(57) **Abstract**

An environmental control system, ECS (30), for an aircraft includes a primary heat exchanger (36), a compressor (42) including an inlet (44) fluidically connected to the primary heat exchanger (36), a turbine (50) operatively connected to the compressor (42), and a cryogenic fluid heat exchanger (65) fluidically connected to the primary heat exchanger (36).

## Description

### BACKGROUND

Exemplary embodiments pertain to the art of aircraft and, more particularly, to a cryogenic fluid heat exchange system for an aircraft environmental control system (ECS).

Aircraft include environmental control systems (ECS) that are operated to condition and pressurize cabin air. In many cases, the aircraft includes a RAM air system that forms part of an air-conditioning pack. The air-conditioning pack conditions and introduces ambient air into an ECS. In the ECS, the ambient air is pressurized and then cooled before being introduced into passenger spaces. In addition to cooling cabin air, other systems are employed to capture water or condensation from the cooling system for use in still other aircraft systems.

### BRIEF DESCRIPTION

Disclosed is an environmental control system (ECS) for an aircraft including a primary heat exchanger, a compressor including an inlet fluidically connected to the primary heat exchanger, a turbine operatively connected to the compressor, and a cryogenic fluid heat exchanger fluidically connected to the primary heat exchanger.

Additionally, or alternatively, in this or other non-limiting examples, a water separator fluidically connected between the cryogenic fluid heat exchanger and the turbine.

Additionally, or alternatively, in this or other non-limiting examples, the cryogenic fluid heat exchanger is connected between an outlet of the compressor and the turbine.

Additionally, or alternatively, in this or other non-limiting examples, a secondary heat exchanger arranged adjacent the primary heat exchanger, the secondary heat exchanger including an inlet portion fluidically connected to the outlet of the compressor, and an outlet portion fluidically connected to the cryogenic fluid heat exchanger.

Additionally, or alternatively, in this or other non-limiting examples, a condensing heat exchanger fluidically connected between the cryogenic fluid heat exchanger and the water separator.

Additionally, or alternatively, in this or other non-limiting examples, another turbine mechanically connected to the turbine, the another turbine having an inlet portion fluidically connected to the condensing heat exchanger and an outlet portion.

Additionally, or alternatively, in this or other non-limiting examples, a source of cryogenic fluid operatively connected to the secondary heat exchanger.

Additionally, or alternatively, in this or other non-limiting examples, a RAM air system operatively connected to the primary heat exchanger and the secondary heat exchanger.

Additionally, or alternatively, in this or other non-limiting examples, the cryogenic fluid heat exchanger is fluidically connected to an inlet of the primary heat exchanger.

Additionally, or alternatively, in this or other non-limiting examples, a source of cryogenic fluid is fluidically connected to the cryogenic fluid heat exchanger, and a fuel cell is operatively connected to the source of cryogenic fluid.

Also disclosed is an aircraft including a fuselage having a tail and a cabin. A first wing is supported by the fuselage. A second wing is supported by the fuselage. A stabilizer is arranged at the tail. An environmental control system (ECS) is mounted in the fuselage. The ECS includes a primary heat exchanger, a compressor including an inlet fluidically connected to the primary heat exchanger, a turbine operatively connected to the compressor. A cryogenic fluid heat exchanger is fluidically connected to the primary heat exchanger.

Additionally, or alternatively, in this or other non-limiting examples, a water separator fluidically connected between the cryogenic fluid heat exchanger and the turbine.

Additionally, or alternatively, in this or other non-limiting examples, the cryogenic fluid heat exchanger is connected between an outlet of the compressor and the turbine.

Additionally, or alternatively, in this or other non-limiting examples, a secondary heat exchanger arranged adjacent the primary heat exchanger, the secondary heat exchanger including an inlet portion fluidically connected to the outlet of the compressor, and an outlet portion fluidically connected to the cryogenic fluid heat exchanger.

Additionally, or alternatively, in this or other non-limiting examples, a condensing heat exchanger fluidically connected between the cryogenic fluid heat exchanger and the water separator.

Additionally, or alternatively, in this or other non-limiting examples, another turbine mechanically connected to the turbine, the another turbine having an inlet portion fluidically connected to the condensing heat exchanger and an outlet portion.

Additionally, or alternatively, in this or other non-limiting examples, a source of cryogenic fluid operatively connected to the secondary heat exchanger.

Additionally, or alternatively, in this or other non-limiting examples, a RAM air system operatively connected to the primary heat exchanger and the secondary heat exchanger.

Additionally, or alternatively, in this or other non-limiting examples, the cryogenic fluid heat exchanger is fluidically connected to an inlet of the primary heat exchanger.

Additionally, or alternatively, in this or other non-limiting examples, a source of cryogenic fluid is fluidically connected to the cryogenic fluid heat exchanger, and a fuel cell is operatively connected to the source of cryogenic fluid.

### BRIEF DESCRIPTION OF THE DRAWINGS

The following descriptions should not be considered limiting in any way. With reference to the accompanying drawings, like elements are numbered alike:
FIG. 1 depicts an aircraft including a cryogenic heat exchanger system in accordance with a non-limiting example;
FIG. 2 depicts a cryogenic heat exchange system in accordance with one non-limiting example;
FIG. 3 depicts a cryogenic heat exchange system in accordance with another non-limiting example;
FIG. 4 depicts a cryogenic heat exchange system in accordance with yet another non-limiting example;
FIG. 5 depicts a cryogenic heat exchange system in accordance with still another non-limiting example; and
FIG. 6 depicts a cryogenic heat exchange system in accordance with yet still another non-limiting example.

### DETAILED DESCRIPTION

A detailed description of one or more embodiments of the disclosed apparatus and method are presented herein by way of exemplification and not limitation with reference to the Figures.

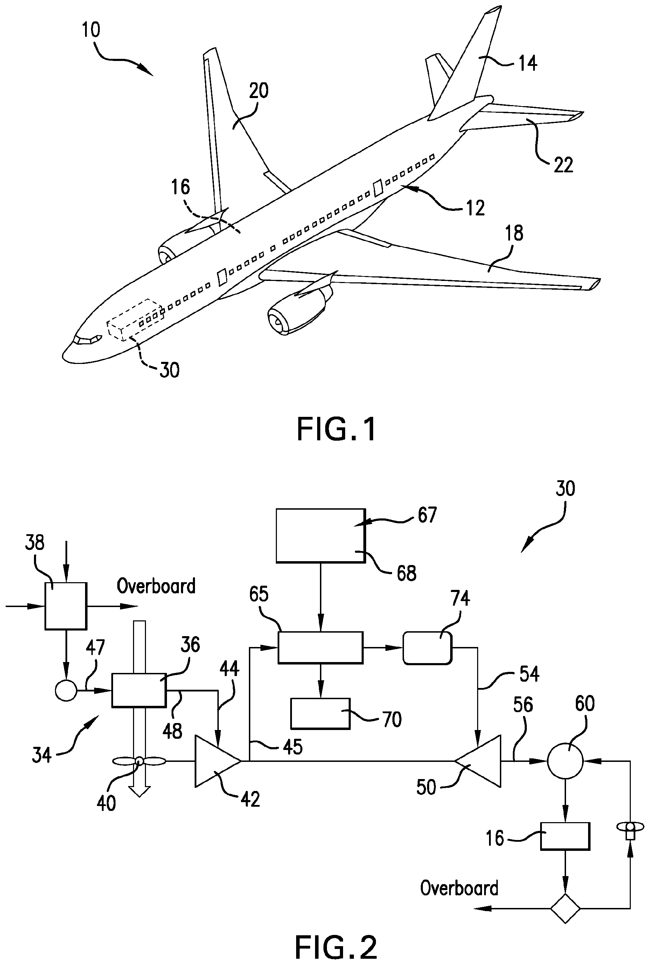

An aircraft, in accordance with a non-limiting example, is indicated generally at 10 in FIG. 1. Aircraft 10 includes a fuselage 12 having a tail 14. Fuselage 12 defines a cabin 16 for passengers and/or crew. Aircraft 10 includes a first wing 18 extending from a first side of fuselage 12 and a second wing 20 extending from a second side of fuselage 12. A stabilizer 22 is provided at tail 14. Aircraft 10 includes an environmental control system (ECS) 30 that operates with cryogenic fluid. The cryogenic fluid is used as a heat sink in ECS 30 that reduces reliance on RAM air, and eliminates components and weight as will be detailed herein. In a non-limiting example, the cryogenic fluid may take the form of liquid hydrogen. Other cryogenic fluids, such as liquid nitrogen, liquid ammonia or other liquids having a boiling point at atmospheric pressure of about 120 K may also be employed.

Reference will now follow to FIG. 2 in describing ECS 30 in accordance with a non-limiting example. ECS 30 includes a RAM air system 34 having a primary heat exchanger 36 connected to a pre-cooler 38. Pre-cooler 38 may receive cooling air that is bled from an engine in aircraft 10. RAM air system 34 also includes a fan 40 that promotes fluid flow through primary heat exchanger 36. ECS 30 further includes a compressor 42 having an inlet 44 and an outlet 45. Primary heat exchanger 36 includes an inlet 47 connected to pre-cooler 38 and an outlet 48 connected to inlet 44 of compressor 42. With this arrangement, high pressure air bled from the engine passes through pre-cooler 38 into primary heat exchanger 36. A turbine 50 is mechanically and/or fluidically connected to compressor 42. Turbine 50 includes an inlet portion 54 and an outlet portion 56 that is connected to a mixer 60. Mixer 60 mixes conditioned air from outlet portion 56 with air recirculated from cabin 16. A combined airstream is passed back into cabin 16.

In a non-limiting example, ECS 30 includes a cryogenic fluid heat exchanger 65 connected to outlet 45 of compressor 42. Cryogenic fluid heat exchanger 65 is also connected to a source of cryogenic fluid 67. In a non-limiting example, source of cryogenic fluid 67 takes the form of a tank 68 of liquid hydrogen. Source of cryogenic fluid 67 may also be connected to a fuel cell 70 and/or consumed in an engine in aircraft 10. A water separator 74 may be connected between cryogenic fluid heat exchanger 65 and turbine 50. With this arrangement, in addition to providing fuel to fuel cell 70, cryogenic fluid passing through cryogenic fluid heat exchanger 65 may also condition air passing from compressor 42 into turbine 50 in order to achieve a desired cooling in cabin 16. Cryogenic fluid heat exchanger 65 reduces component number and weight as compared to a conventional air-cycle air conditioning system.

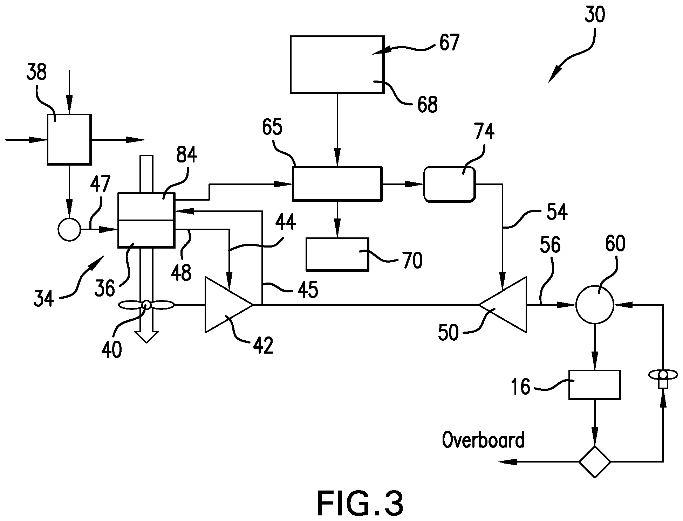

Referring to FIG. 3, in which like reference numbers represent corresponding parts in the respective views, depicts ECS 30 in accordance with another non-limiting example. RAM air system 34 may include a secondary heat exchanger 84 arranged adjacent to primary heat exchanger 36. Secondary heat exchanger 84 provided an added level of conditioning for the fluid passing from RAM air system 34 to cryogenic fluid heat exchanger 65. That is, fluid passing from outlet 45 of compressor 42 passes through secondary heat exchanger 84 before flowing through cryogenic fluid heat exchanger 65 and ultimately to cabin 16.

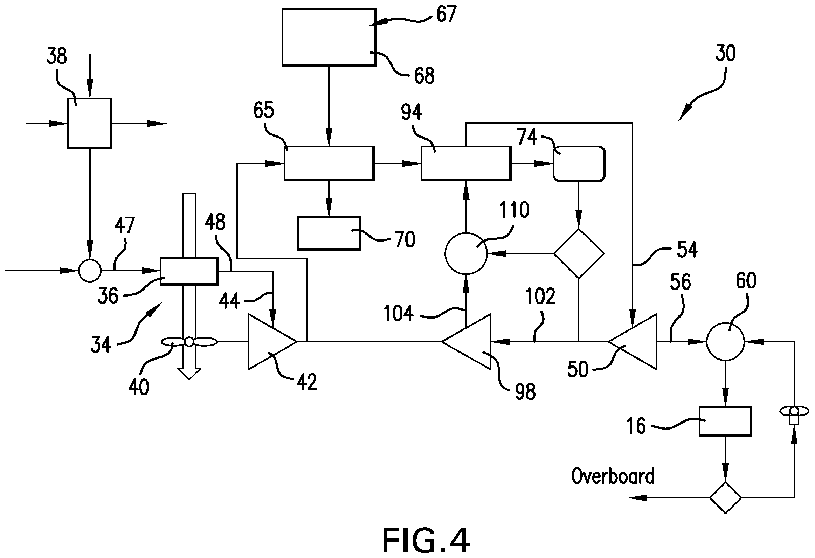

FIG. 4, in which like reference numbers represent corresponding parts in the respective views, depicts ECS 30 in accordance with yet another non-limiting example. ECS 30 includes a condensing heat exchanger 94 and another turbine 98 having an inlet section 102 and an outlet section 104. Outlet section 104 passes to a mixer 110 that sends a mixture of fluid that passes directly from water separator 74, and fluid that passes from water separator 74 expanded in another turbine 98 to condensing heat exchanger 94. The combined fluid passed from condensing heat exchanger 94 to turbine 50 and on to cabin 16. With this arrangement, less RAM air and/or lower pressure air can be employed in ECS 30.

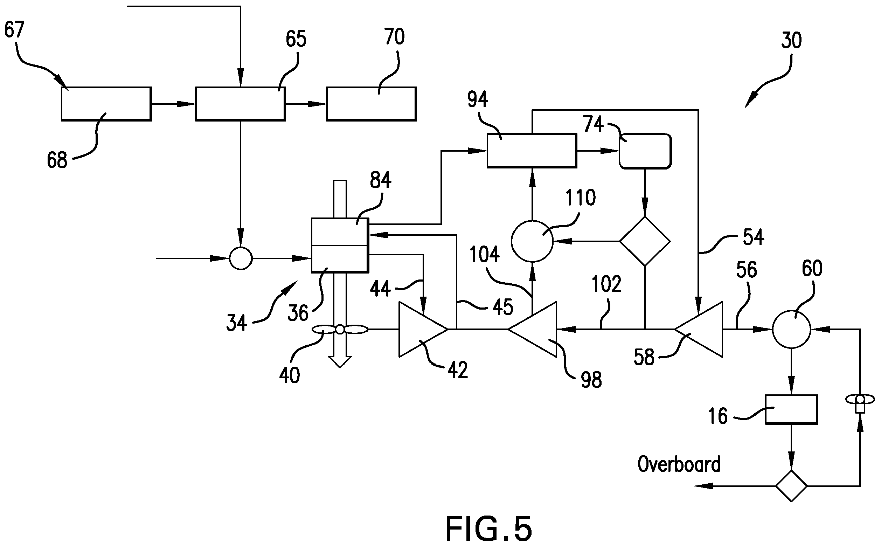

FIG. 5, in which like reference numbers represent corresponding parts in the respective views, depicts ECS 30 in accordance with still yet another non-limiting example. In FIG. 5, cryogenic fluid heat exchanger 65 is depicted as being connected to an inlet of primary heat exchanger 36. With this arrangement, cryogenic fluid heat exchanger 65 acts as a pre-cooler for RAM air system 34. Replacing the pre-cooler provides additional efficiencies for ECS 30 by eliminating fan bleed and reducing component weight.

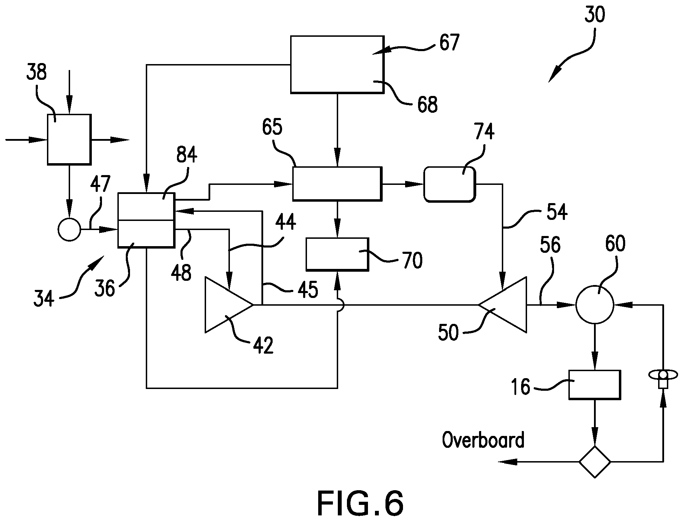

FIG. 6, in which like reference numbers represent corresponding parts in the respective views, depicts ECS 30 in accordance with yet still another non-limiting example. In FIG. 6, RAM air system 34 is replaced with a connection to source of cryogenic fluid 67. That is, secondary heat exchanger 84 is connected to source of cryogenic fluid 67. Primary heat exchanger 36 is then connected to fuel cell 70. In this manner, additional components may be removed from aircraft 10 without sacrificing cooling. The removal of the additional components reduces weight and eliminates various maintenance cycles.

At this point, it should be understood that the non-limiting examples described herein disclose an environmental control system that employs cryogenic fluid to condition air passing to a cabin in an aircraft. The cryogenic fluid is sourced from a fuel cell supply and routed through the ECS to condition air passing through a RAM air system. The cryogenic fluid may be used to cool air passing into the RAM air system or to condition air passing from a compressor to a turbine. Combining fuel supply with the ECS reduces components that take up space in the aircraft, add weight, and require maintenance.

An intermediate secondary non-flammable or inert fluid loop (not shown) may be employed to remove heat from ECS air, (RAM air or compressed air, e.g., from engine bleed or an air compressor driven by a motor into the cryogenic liquid. This secondary fluid system, that employs cryogenic liquid as a heat sink, may be deployed in various heat exchanger embodiments discussed herein.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An environmental control system, ECS (30), for an aircraft comprising:
a primary heat exchanger (36);
a compressor (42) including an inlet (44) fluidically connected to the primary heat exchanger;
a turbine (50) operatively connected to the compressor; and
a cryogenic fluid heat exchanger (65) fluidically connected to the primary heat exchanger.

2. The ECS according to claim 1, further comprising: a water separator (74) fluidically connected between the cryogenic fluid heat exchanger and the turbine.

3. The ECS according to claim 2, wherein the cryogenic fluid heat exchanger (65) is connected between an outlet of the compressor and the turbine.

4. The ECS according to claim 3, further comprising a secondary heat exchanger (84) arranged adjacent the primary heat exchanger, the secondary heat exchanger including an inlet portion fluidically connected to the outlet of the compressor, and an outlet portion fluidically connected to the cryogenic fluid heat exchanger.

5. The ECS according to claim 3, further comprising a condensing heat exchanger (94) fluidically connected between the cryogenic fluid heat exchanger and the water separator.

6. The ECS according to claim 5, further comprising: another turbine mechanically connected to the turbine, the another turbine having an inlet portion fluidically connected to the condensing heat exchanger and an outlet portion.

7. The ECS according to claim 4, further comprising: a source of cryogenic fluid operatively connected to the secondary heat exchanger.

8. The ECS according to claim 4, further comprising: a RAM air system (34) operatively connected to the primary heat exchanger and the secondary heat exchanger.

9. The ECS according to claim 2, wherein the cryogenic fluid heat exchanger (65) is fluidically connected to an inlet of the primary heat exchanger.

10. The ECS according to claim 1, further comprising:
a source of cryogenic fluid fluidically connected to the cryogenic fluid heat exchanger; and
a fuel cell (70) operatively connected to the source of cryogenic fluid.

11. An aircraft comprising:
a fuselage (12) including a tail (14), the fuselage including a cabin (16);
a first wing (18) supported by the fuselage;
a second wing (20) supported by the fuselage;
a stabilizer (22) arranged at the tail; and
an environmental control system, ECS (30), as claimed in any preceding claim, mounted in the fuselage.
